# EUROPEAN PATENT APPLICATION

(11) **EP 2 063 640 A1**
(43) Date of publication of application: **27.05.2009**
(21) Application number: 08275038.1
(22) Date of filing: 25.07.2008
(51) Int. Cl.: H04N 7/173, H04N 7/24

(54) **Video data communication system and method**

(30) Priority: 25.07.2007 GB 0714532
(71) Applicant: Intellistream Limited, London E1 6QL (GB)
(72) Inventor: Peltonen, Jani, London, greater London E1 6QL (GB)
(74) Representative: Exell, Jonathan Mark

(57) **Abstract**

A video data communication system, method and computer program for providing interactive video communications to a remote user is disclosed. The system comprises a compositing, compression and encoding system and an interaction engine. The compositing, compression and encoding system is arranged to composite, compress and encode video data for transmission to the remote user. The interaction engine is arranged to receive interactions from the remote user and is responsive to communicate with the compositing, compression and encoding system to cause a change to said compression and transmission during interaction with a remote user.

## Description

### Field of the Invention

The present invention relates to a video data communication system and method which is particularly applicable to the provision of interactive video applications.

### Background to the Invention

Current video data communication systems and method can be broadly categorised into two types:
Interactive; and,
Non-Interactive.

Non-interactive video data communication systems operate on some form of broadcast mechanism (even if the transmission is to a single recipient). The video data is prepared in sequence at the transmitter and transmitted to the recipient. As the transmitter has advance knowledge of the video data, and possibly also on characteristics of the transmission medium, it can prepare it accordingly. For example, the video data can be compressed based on changes from a current video frame to that of a future video frame because the content of the future video frame is known to the transmitter. Similarly, encoding of the video data can be selected dependent on desired latency, available bandwidth and the like. This advance knowledge of content allows compression, buffering and the like to be performed which in turn improve the quality of the video received at the recipient and reduce latency during transmission.

Much of the current research in video data communication systems focuses on non-interactive content (i.e. movies or TV) where the content is often compressed in several passes to increase the quality of the video.

These systems generally do not worry about latency (the amount of time it takes between sending a compressed frame into the compressor and seeing the uncompressed frame on a receiving device).

Mechanisms used in interactive video data communication systems differ from those of non-interactive video data communication systems because the content to be delivered includes an element of unpredictability. In order to be interactive, the system must be responsive to some input or action of the user. This in turn means that the content demanded may change due to the interaction. As such, compression and buffering conflict with the desire for an interactive video data communications system to be responsive to the interaction.

If a video stream is being played to a user and the user selects an option at their terminal, it is undesirable for the transmitter to wait until any compressed buffered video data has been transmitted to the user before acting on the user selection. Such a lag in a response would significantly reduce the interactive feel of any application and may also result in the user pressing an input many times thinking it had not been received. Therefore, current interactive video communication systems sacrifice the quality improvement that compression and buffering of a video data stream offer in order to preserve the interactive feel of an application. Whilst this produces usable interactive systems, it can result in extremely poor video quality, particularly on low bandwidth/high latency networks like mobile and wireless communication networks.

With interactive content the latency is of extreme importance. If the time it takes between a user selecting an option and seeing a result on the video stream is too long, the interactivity suffers and sophisticated interactions become impossible.

Most of the methods used to improve quality in video compression do not work for interactive content because they increase the latency. Bi-directional frames cannot be used because they require the compressor to buffer several frames worth of data thus dramatically increasing the latency; the same problem applies to other techniques relying on better analysis of the video stream.

It is also important that the compressed stream can be read and understood by any baseline H.263 and MPEG4 encoders such as found in 3G handsets. This rules out any non-standard modification of the bit stream.

### Statement of Invention

According to an aspect of the present invention, there is provided a video data communication system for providing interactive video communications to a remote user, the system comprising a compositing, compression and encoding system and an interaction engine, wherein the compositing, compression and encoding system is arranged to compress and encode video data for transmission to the remote user, the interaction engine being arranged to receive interactions from the remote user and being responsive to communicate with the compositing, compression and encoding system to cause a change to said compression and transmission during interaction with a remote user.

The system may further comprise a content repository arranged to store layout data on video to be produced, wherein the compositing, compression and encoding system is arranged to prioritize compression and encoding of at least portions of the video data in dependence on the layout data.

The layout data may include a layout definition in a page description language.

The system may further comprise means for discovering layout data on video to be produced from said compositing, compression and encoding system, wherein the compositing, compression and encoding system is arranged to prioritize compositing, compression and encoding of at least portions of the video data in dependence on the discovered layout data.

The compositing, compression and encoding system may be arranged to perform said compression in dependence on said layout data.

The compositing, compression and encoding system may be arranged to perform encoding in dependence on said layout data.

The interaction engine may be arranged to trigger a response in dependence on interactions received from the remote user.

The encoded video data may comprise an H.263 or MPEG-4, or other macroblock/motion prediction encoded video stream.

The system may further comprise a remote client, the remote client including input means for communicating user inputs to the interaction engine and a video display for displaying received video from the video data communication system.

The remote client may comprise a selected one of:
a mobile telephone, an internet based video terminal, a videophone, a PDA, or a PC.

According to another aspect of the present invention, there is provided a method for providing interactive video communications to a remote user comprising:
compositing compressing and encoding video data for transmission to the remote user, receiving interactions from the remote user;
causing a change to said compression and transmission in dependence on said interactions from the remote user.

The method may further comprise storing layout data on video to be produced, wherein the step of compositing, compression and encoding includes prioritizing compositing, compression and encoding of at least portions of the video data in dependence on the layout data.

The method may further comprise discovering layout data on video to be produced from said compositing, compression and encoding steps; and, prioritizing compositing, compression and encoding of at least portions of the video data in dependence on the discovered layout data.

The compositing, compression and encoding may be performed in dependence on said layout data.

The method may further comprise triggering a response in dependence on interactions received from the remote user.

The present invention seeks to improve the perceived quality and responsiveness of an interactive video stream. Preferably, the interactive video is used to display menus, options, graphics and real time information. In preferred embodiments, the video can be delivered to the user either by a 3G video handset or an internet based video terminal.

### Brief Description of the Drawings

Embodiments of the present invention will now be described in detail, by way of example only, with reference to the accompanying drawings in which:
Figure 1 is a schematic diagram of a video data communication system according to an embodiment of the present invention;
Figures 2 and 3 are illustrations of aspects of embodiments of the present invention in use;
Figure 4 is a schematic diagram of a video data communication system according to another embodiment of the present invention; and,
Figure 5 is a schematic diagram of a user interface provided by a video data communication system according to an embodiment of the present invention.

### Detailed Description

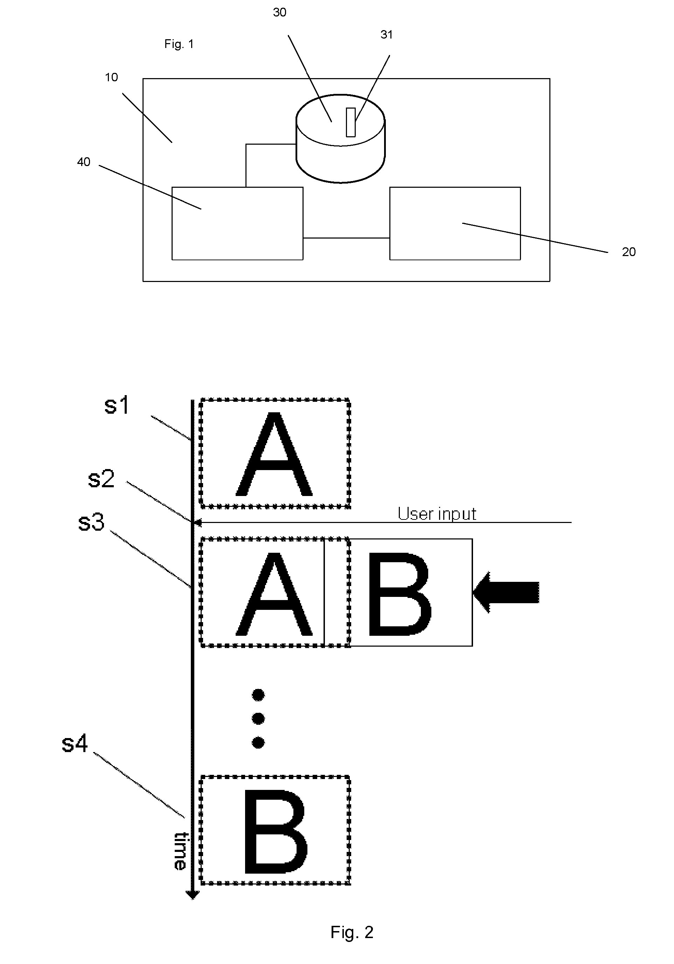

Figure 1 is a schematic diagram of a video data communication system according to an embodiment of the present invention.

The video data communication system 10 includes an interaction engine 20, a content repository 30, a compositing, compression and encoding system 40.

The content repository 30 includes layout data 31 that describes interactive video pages in a page description language available for presentation to a user.

The compositing, compression and encoding system 40 is arranged to access the content repository 30 to obtain the layout data.

The compositing, compression and encoding system 40 uses the layout data 31 to make more intelligent decisions about the compression. (e.g. if the layout indicates that a part of the screen is about to be replaced by another graphic, that part of the screen is given reduced priority until the new graphic appears). Additionally, it uses the layout data to obtain the kind of structural data on the video content that would normally only be available to multi-pass encoders, thereby allowing multi-pass encoding to be used.

The interaction engine 20 is arranged to receive user interactions (for example key presses and the like). Upon receipt of a user interaction, the interaction engine is arranged to trigger an appropriate response by the video data communication system 10.

The compositing, compression and encoding system 40 is also coupled to the interaction engine 20. When a user selects an option it is important that they receive some kind of visual feedback as soon as possible. This is accomplished by directly coupling the compositing, compression and encoding system 40 with the application logic. This allows the system to keep the frames following an interaction event as small as possible (even at the expense of overall compression efficiency).

As a result of used of page description to drive encoding and compression and the interaction engine 20 being linked to the compositing, compression and encoding system, much more responsive interactive video streams can be provided than by a typical system delivering interactive video using standard encoders.

In preferred embodiments of the present invention, an interactive video session (i.e. the video stream responds to user actions) is used to allow the user to select different options. Once the user has selected an option at the receiving device the video stream should quickly display some kind of response. It is important that the user sees the response as quickly as possible so that the experience feels interactive.

Note that although the content of the video is described in terms of elements and pages, the final video stream is not aware of any of these constructs but consists of macro blocks and motion vectors (like H.263)

### Example 1

As shown in Figure 2, a simple sequence could consist of initially displaying page "A" which could be a visual prompt asking the user to select an option.

At step s1, page "A" completely fills the transmitted video frame. At step s2, the user input is received.

Once the user picks an option a new page "B" would be generated and a video transition effect would transition page "B" into the video in step s3. In this example the transition is a simple horizontal slide. Eventually, in step s4, only the page "B" is shown.

In response to the user interaction a page description is read that tells the system to slide in page B so that in a few frame all of A will be obscured.

The encoder uses this information to stop allocating compression bandwidth to page A because it knows that in a few frames time it will be completely obscured by page B.

The encoder can also use the page description to encode the motion vectors.

The transition effect itself, in this case a horizontal slide, can be used to reduce the amount of processing power needed to calculate the motion vectors for each video frame.

### Example 2

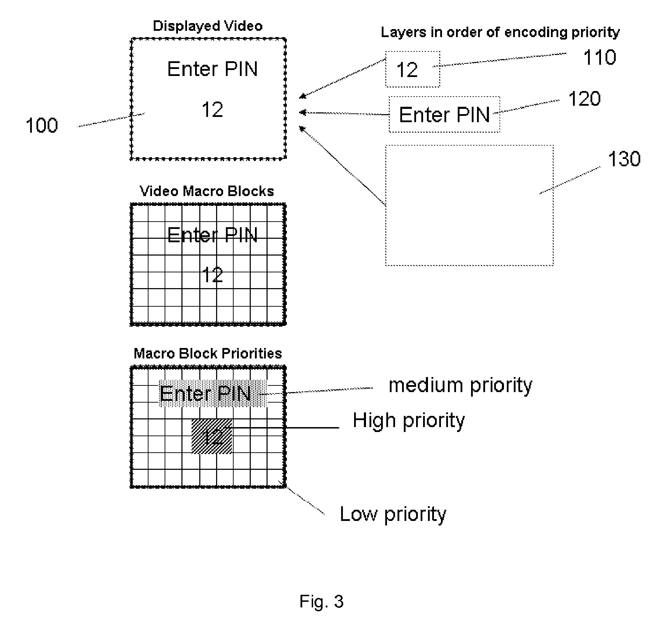

Figure 3 illustrates a more complex example in which an interactive video clip is asking the user to enter some information. The page 100 consists of three elements; the textual prompt 110, a text box 120 that shows what the user is entering and a background animation 130. These elements are allocated different priorities in the corresponding layout data 31 with the background animation 130 having the lowest priority and the interactive text box 120 having the highest priority.

The encoding and compression system 40 makes use of this page layout data 31 when it assigns priorities to the different macro blocks that make up the video stream. This ensures that any change in the interactive textbox 120 is encoded and therefore transmitted before any animation that may be taking place in the background layer 130.

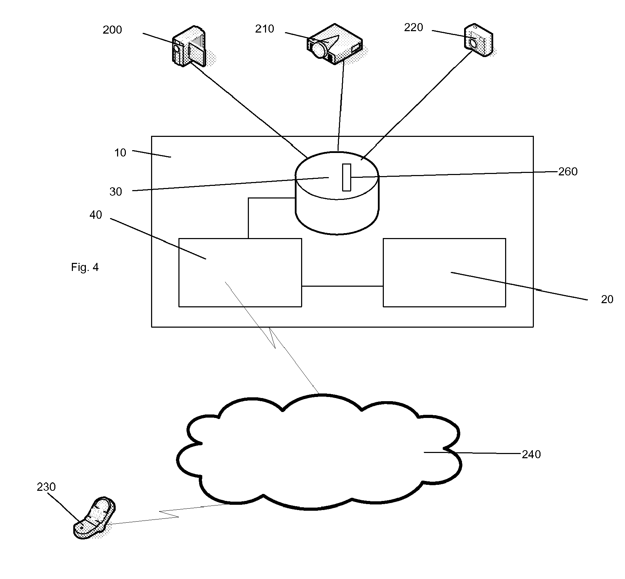

Figure 4 is a schematic diagram of a video data communication system according to another embodiment of the present invention.

In the illustrated embodiment, a number of video cameras 200-220 supply real time video feed to the video data communication system 10.

The video data communication system 10 is arranged to provide an interactive video monitoring service to user's mobile telephone 230 via a mobile telephone network 240.

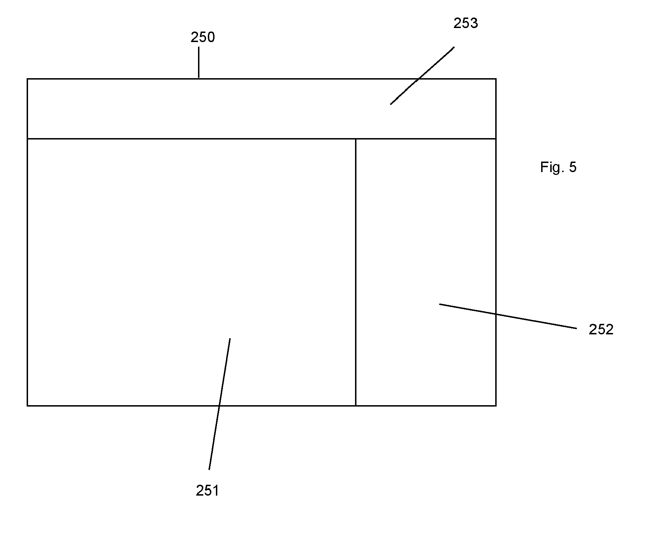

A user interface 250, as illustrated in Figure 5, is provided to the user at the mobile telephone 230. The user interface 250 includes a video display area 251, a user interaction area 252 and a system messaging area 253.

A corresponding page layout 260 to that of the user interface 250 is stored in the content repository 30. The page layout 260 prioritizes the video display area 251 over that of the user interaction area 252 and system messaging area 253 when the user interaction area 252 and system messaging area 253 are static (system messages do not change and no user input is received). However, when a change to the system messages is encountered, the system messaging area 253 is prioritized over the video display area 251. If a user input is received at the interaction engine 20 then the user interaction area 252 is prioritized for a predetermined period of time.

In operation, the video cameras 200-220 each supply a real time data stream feed to the video data communication system 10. The compositing, compression and encoding system 40 prioritizes resources to the compression and encoding of video from the default data stream feed (eg. the stream from camera 200). As such, the video display area 251 is frequently updated and refreshed at the mobile telephone 250 whilst the user interaction area 252 and system messaging area 253 are infrequently refreshed.

Should the system 10 need to display a new system message, the compositing, compression and encoding system 40 detects the existence of a change and prioritizes the system messaging area 253. Similarly, should the user press a key on the mobile phone 230 to interact with the system 10, the interaction engine 20 detects this and causes the compositing, compression and encoding system 40 to switch priority to that of the user interaction area 252.

In this manner, context and application sensitive encoding and compression can be applied so that the user receives the best quality video where possible but if interaction is desired, video quality is sacrificed to allow a more responsive interaction experience. The video data stream is selectively compressed and encoded to take advantage of the communication with the interaction engine and also the a-priori knowledge gained from the layout data. However, once encoded and transmitted, it is simply a video data stream. It will be appreciated that different areas of a particular frame may be subject to different refresh rates, compression quality and the like.

Although the embodiments above have referred to layout data stored in a repository, it will be appreciated that it could also be discovered from the compositing system 40.

## Claims

1. A video data communication system for providing interactive video communications to a remote user, the system comprising a compositing, compression and encoding system and an interaction engine, wherein the compositing, compression and encoding system is arranged to composite, compress and encode video data for transmission to the remote user, the interaction engine being arranged to receive interactions from the remote user and being responsive to communicate with the compositing, compression and encoding system to cause a change to said compression and transmission during interaction with a remote user.

2. A video data communication system according to claim 1, further comprising a content repository arranged to store layout data on video to be produced, wherein the compositing, compression and encoding system is arranged to prioritize compositing, compression and encoding of at least portions of the video data in dependence on the layout data.

3. A video data communication system according to claim 2, wherein the layout data includes a layout definition in a page description language.

4. A video data communication system according to any preceding claim, further comprising means for discovering layout data on video to be produced from said compositing, compression and encoding system, wherein the compositing, compression and encoding system is arranged to prioritize compositing, compression and encoding of at least portions of the video data in dependence on the discovered layout data.

5. A video data communications system according to claim 2 or 3, wherein the compositing, compression and encoding system is arranged to perform said compression in dependence on said layout data.

6. A video data communications system according to claim 2, 3 or 5, wherein the compositing, compression and encoding system is arranged to perform encoding in dependence on said layout data.

7. A video data communications system according to any preceding claim, wherein the interaction engine is arranged to trigger a response in dependence on interactions received from the remote user.

8. A video data communication system according to any preceding claim, wherein the encoded video data comprises an H.263 or MPEG-4 encoded video stream.

9. A video data communication system as claimed any preceding claim, further comprising a remote client, the remote client including input means for communicating user inputs to the interaction engine and a video display for displaying received video from the video data communication system.

10. A method for providing interactive video communications to a remote user comprising:
compositing compressing and encoding video data for transmission to the remote user, receiving interactions from the remote user;
causing a change to said compression and transmission in dependence on said interactions from the remote user.

11. A method according to claim 10, further comprising:
storing layout data on video to be produced, wherein the step of compositing, compressing and encoding includes prioritizing compositing, compression and
encoding of at least portions of the video data in dependence on the layout data.

12. A method according to claim 11, wherein the layout data includes a layout definition in a page description language.

13. A method according to claim 10, 11 or 12, further comprising:
discovering layout data on video to be produced from said compositing, compression and encoding steps; and,
prioritizing compositing, compression and encoding of at least portions of the video data in dependence on the discovered layout data.

14. A method according to claim 11 or 12, wherein the compression is performed in dependence on said layout data.

15. A method according to claim 11 or 12, wherein the encoding is performed in dependence on said layout data.

16. A method according to any of claims 10 to 15, further comprising triggering a response in dependence on interactions received from the remote user.
